(19) **Europäisches Patentamt European Patent Office Office européen des brevets**

(11) **EP 4 370 392 B1**

(12) **FASCICULE DE BREVET EUROPEEN**

(45) Date de publication et mention de la délivrance du brevet:
**22.10.2025 Bulletin 2025/43**

(21) Numéro de dépôt: **22741316.8**

(22) Date de dépôt: **13.07.2022**

(51) Classification Internationale des Brevets (IPC):
**B60W 10/20** (2006.01)   **B60W 30/02** (2012.01)
**B60W 30/045** (2012.01)   **B62D 1/00** (2006.01)
**B62D 15/02** (2006.01)

(52) Classification Coopérative des Brevets (CPC):
**B60W 10/20; B60W 30/02; B60W 30/045; B62D 15/025;** B60W 2510/20; B60W 2510/207; B60W 2520/10; B60W 2520/105; B60W 2520/12; B60W 2520/14; B60W 2520/16; B60W 2520/18; B60W 2520/20; B60W 2530/201; B60W 2552/30;
(Cont.)

(86) Numéro de dépôt international:
**PCT/EP2022/069539**

(87) Numéro de publication internationale:
**WO 2023/285502 (19.01.2023 Gazette 2023/03)**

(54) **PROCÉDÉ ET DISPOSITIF DE CONTRÔLE DE LA TRAJECTOIRE D'UN VÉHICULE AUTOMOBILE CIRCULANT SUR UNE VOIE DE CIRCULATION ET VÉHICULE ASSOCIÉ**

VERFAHREN UND VORRICHTUNG ZUR STEUERUNG DES WEGES EINES KRAFTFAHRZEUGS, DAS SICH IN EINER FAHRSPUR FORTBEWEGT, UND ZUGEHÖRIGES FAHRZEUG

METHOD AND DEVICE FOR CONTROLLING THE PATH OF A MOTOR VEHICLE TRAVELLING IN A TRAFFIC LANE AND ASSOCIATED VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.07.2021 FR 2107669**

(43) Date de publication de la demande:
**22.05.2024 Bulletin 2024/21**

(73) Titulaires:
• **Ampere SAS**
  **92100 Boulogne-Billancourt (FR)**
• **Nissan Motor Co., Ltd.**
  **Kanagawa, 221-0023 (JP)**

(72) Inventeurs:
• **DAVINS, Joan**
  **78084 Guyancourt cedex (FR)**
• **LE COQ, Benjamin**
  **27920 Saint Pierre de Bailleul (FR)**
• **QUILLIARD, Raphael**
  **78084 Guyancourt cedex (FR)**

(74) Mandataire: **Jacobacci Coralis Harle**
  **32, rue de l'Arcade**
  **75008 Paris (FR)**

(56) Documents cités:
**EP-A1- 3 369 634      EP-A1- 3 738 850**
**WO-A1-2020/126840      WO-A1-2021/110423**
**US-A1- 2019 202 454**

• **SIMON MUSTAKI: "Outils de pré-calibration numérique des lois de commande de systèmes de systèmes : Application aux aides à la conduite et au véhicule autonome", 8 July 2019 (2019-07-08), XP055714240, Retrieved from the Internet <URL:https://tel.archives-ouvertes.fr/tel-02297892/document> [retrieved on 20200713]**

(52) Classification Coopérative des Brevets (CPC):
(Cont.)B60W 2710/207; B60Y 2300/02;
B60Y 2300/0223; B60Y 2300/0227

(52) Classification Coopérative des Brevets (CPC):
(Cont.)B60W 2710/207; B60Y 2300/02;
B60Y 2300/0223; B60Y 2300/0227

## Description

### Domaine technique de l'invention

La présente invention concerne de manière générale la commande de trajectoire d'un véhicule automobile, afin notamment de maintenir le véhicule automobile dans une voie de circulation lors d'un virage.

Elle concerne plus particulièrement un procédé et un dispositif de contrôle de la trajectoire d'un véhicule automobile circulant sur une voie de circulation.

L'invention concerne également un véhicule automobile comprenant un tel dispositif de contrôle de la trajectoire.

### Etat de la technique

Les véhicules automobiles autonomes ou semi-autonomes sont prévus pour rouler sur des routes ouvertes sans intervention du conducteur. Ils sont équipés pour cela d'une série de capteurs numériques permettant d'acquérir des données caractérisant l'état du véhicule automobile et l'environnement. Le véhicule automobile est également muni de logiciels permettant d'analyser ces données. Ces logiciels utilisent des algorithmes permettant ensuite de générer des commandes afin de diriger le véhicule automobile. En particulier, ces logiciels sont conçus pour notamment générer une loi de commande contrôlant un système de direction assistée de manière à maintenir le véhicule automobile au centre de la voie de circulation. Une telle loi de commande est classiquement désignée par l'appellation d'origine anglo-saxonne *« Lane Centering Assist »* (LCA).

La loi de commande permet notamment d'ajuster l'angle de braquage des roues directrices du véhicule automobile. Cet angle de braquage dépend de la courbure de la voie de circulation, de la vitesse du véhicule automobile et d'un paramètre appelé gradient de sous-virage, qui quantifie le comportement du véhicule automobile lors de sa prise de virage. Le gradient de sous-virage peut être défini comme la quantité d'angle à apporter à la roue pour que le véhicule automobile observe une accélération latérale de 1 m/s$^2$.

Ce paramètre n'est pas mesurable. De plus, la plage de variations de ce paramètre est assez importante et cela peut entraîner une mauvaise consigne pour l'angle de braquage et donc un décentrage important du véhicule automobile lors de la prise de virage.

La demande de brevet FR3104106 décrit une méthode de détermination du gradient de sous-virage. Cette méthode repose sur la modification de cette grandeur par rapport à une valeur nominale dès qu'un survirage est observé.

WO 2021/110423 A1 décrit un procédé pour contrôler un véhicule en fonction d'un gradient de sous-virage. Cependant, les changements rencontrés au cours du trajet du véhicule automobile, par exemple les changements de chargement du véhicule automobile, qui ont un fort impact sur la valeur du gradient de sous-virage (et donc sur la valeur de l'angle de braquage) ne sont pas pris en compte de manière instantanée lors du déplacement du véhicule automobile.

### Présentation de l'invention

La présente invention propose d'améliorer le contrôle de la trajectoire d'un véhicule automobile lors de la prise d'un virage en tenant compte, en temps réel, des évolutions rencontrées lors du déplacement du véhicule automobile.

Plus particulièrement, on propose selon l'invention un procédé de de contrôle de la trajectoire d'un véhicule automobile circulant sur une voie de circulation, comprenant des étapes de :

- détection d'un virage de la voie de circulation, puis, lorsque le véhicule automobile emprunte ledit virage,
- détermination d'une première grandeur et d'une deuxième grandeur pour une pluralité de pas d'échantillonnage successifs, à partir de variables d'état caractéristiques du déplacement du véhicule automobile,
- détermination d'une première valeur stockée et d'une deuxième valeur stockée, ladite première valeur stockée étant fonction de la première grandeur déterminée au pas d'échantillonnage courant et de premières grandeurs déterminées pour au moins un des pas d'échantillonnage précédents, ladite deuxième valeur stockée étant fonction de la deuxième grandeur déterminée au pas d'échantillonnage courant et de deuxièmes grandeurs déterminées pour au moins un des pas d'échantillonnage précédents,
- mémorisation desdites première valeur stockée et deuxième valeur stockée déterminées pour chaque pas d'échantillonnage, puis lorsque le véhicule automobile quitte ledit virage :

  - détermination d'une valeur du gradient de sous-virage en fonction desdites première valeur stockée et deuxième valeur stockée mémorisées, et
  - détermination d'une commande du véhicule automobile sur la base de la valeur du gradient de sous-virage déterminée.

**EP 4 370 392 B1**

Ainsi, grâce à l'invention, les valeurs de gradient de sous-virage sont déterminées, de manière régulière et en temps réel, lors du déplacement du véhicule automobile. Plus particulièrement la valeur de gradient sous-virage est déterminée et actualisée de virage en virage tout au long du déplacement du véhicule automobile sur la voie de circulation. De manière avantageuse, la consigne de commande de la trajectoire du véhicule automobile est donc également ajustée en temps réel. Cela permet alors de maintenir un véhicule automobile le plus proche de la trajectoire idéale au centre de la voie de circulation (en ligne droite comme en virage) sans entraîner des changements brutaux de trajectoire. Cela permet donc de garantir le confort des occupants du véhicule automobile en évitant les à-coups lors des changements de commande de la trajectoire.

La présente invention trouve une application particulièrement avantageuse dans le cas de véhicules lourds ou de véhicules utilitaires dont la répartition du chargement peut varier au cours du déplacement (par exemple lors de livraison). Le gradient de sous-virage est ainsi ajusté tout au long du déplacement du véhicule automobile, en tenant compte de ces modifications de chargement et sans intervention extérieure.

D'autres caractéristiques avantageuses et non limitatives du procédé de contrôle conforme à l'invention, prises individuellement ou selon toutes les combinaisons techniquement possibles, sont les suivantes :

- la première valeur stockée est fonction de la somme de la première grandeur déterminée au pas d'échantillonnage courant et de premières grandeurs déterminées pour au moins un des pas d'échantillonnage précédents et la deuxième valeur stockée est fonction de la somme de la deuxième grandeur déterminée au pas d'échantillonnage courant et de deuxièmes grandeurs déterminées pour au moins un des pas d'échantillonnage précédents ;
- les variables d'état caractéristiques du déplacement du véhicule automobile sont fonction d'une composante d'un angle de braquage d'une roue du véhicule automobile, d'une courbure de la voie de circulation, d'une vitesse de déplacement du véhicule automobile ou d'un empattement du véhicule automobile ;
- il est également prévu, préalablement à l'étape de détection du virage, une étape d'initialisation d'une valeur de gradient de sous-virage à partir d'une valeur prédéterminée ;
- l'étape de détermination de la valeur du gradient de sous-virage est mise en œuvre d'un virage à un autre virage emprunté par le véhicule automobile ;
- il est également prévu une étape de correction de la valeur du gradient de sous-virage afin de déterminer une valeur intermédiaire du gradient de sous-virage, ladite valeur intermédiaire du gradient de sous-virage étant déterminée sur la base d'une pondération entre la valeur du gradient de sous-virage déterminée et une valeur prédéterminée ;
- la valeur du gradient de sous-virage est déterminée sur la base d'un rapport entre la première valeur stockée et la deuxième valeur stockée ;
- il est également prévu des étapes de :

  a) détermination d'une première valeur d'accélération et d'une deuxième valeur d'une autre accélération du véhicule automobile,
  b) détermination d'une différence entre la première valeur d'accélération et la deuxième valeur de l'autre accélération,
  c) si la différence déterminée est supérieure à un seuil prédéterminé, autre correction de la valeur du gradient de sous-virage à partir d'une valeur de correction fonction de ladite différence déterminée ;

- la détection du virage dépend de paramètres caractéristiques du déplacement du véhicule automobile, une partie au moins des paramètres étant choisis parmi un angle d'une roue avant du véhicule automobile, une vitesse de lacet du véhicule automobile, un écart latéral entre le centre de gravité du véhicule automobile et une trajectoire idéale, une accélération transversale du véhicule automobile ou une vitesse de déplacement du véhicule automobile ;
- la première grandeur et la deuxième grandeur sont déterminées à partir d'une méthode des moindres carrés récursifs fonction de variables d'état caractéristiques du déplacement du véhicule automobile ; et
- l'étape de détermination de la commande du véhicule automobile comprend une sous-étape de détermination d'une composante d'un angle de braquage d'une roue du véhicule automobile. L'invention concerne également un véhicule automobile comprenant un groupe motopropulseur, un système de direction, et un dispositif de contrôle en temps réel de la trajectoire, tel qu'introduit précédemment, adapté à commander le système de direction.

L'invention concerne également un dispositif de contrôle de la trajectoire d'un véhicule automobile circulant sur une voie de circulation, comprenant un calculateur et une mémoire munie d'une base de données présentant un nombre d'emplacements fini, ledit calculateur étant conçu pour :

- détecter un virage de la voie de circulation, puis, lorsque le véhicule automobile emprunte ledit virage,
- déterminer une première grandeur et une deuxième grandeur pour une pluralité de pas d'échantillonnage successifs, à partir de variables d'état caractéristiques du déplacement du véhicule automobile,

4

- déterminer une première valeur stockée et une deuxième valeur stockée, ladite première valeur stockée étant fonction de la première grandeur déterminée au pas d'échantillonnage courant et de premières grandeurs déterminées pour au moins un des pas d'échantillonnage précédents, ladite deuxième valeur stockée étant fonction de la deuxième grandeur déterminée au pas d'échantillonnage courant et de deuxièmes grandeurs déterminées pour au moins un des pas d'échantillonnage précédents,
- mémoriser lesdites première valeur stockée et deuxième valeur stockée déterminées pour chaque pas d'échantillonnage, puis lorsque le véhicule automobile quitte ledit virage :

  - déterminer une valeur du gradient de sous-virage en fonction desdites première valeur stockée et deuxième valeur stockée mémorisées, et
  - déterminer une commande du véhicule automobile sur la base de la valeur du gradient de sous-virage déterminée.

L'invention concerne également un véhicule automobile comprenant un groupe motopropulseur, un système de direction, et un dispositif de contrôle en temps réel de la trajectoire, tel qu'introduit précédemment, adapté à commander le système de direction.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

## Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :

[Fig.1] représente une vue schématique d'une partie d'un véhicule automobile ;
[Fig.2] est une représentation du modèle « bicyclette » appliqué au véhicule automobile se déplaçant dans une voie de circulation ;
[Fig.3] représente, sous forme de logigramme, un exemple de procédé de de contrôle de la trajectoire du véhicule automobile conforme à l'invention ; et
[Fig.4] représente un schéma fonctionnel en boucle fermée d'un procédé de commande de trajectoire du véhicule automobile.

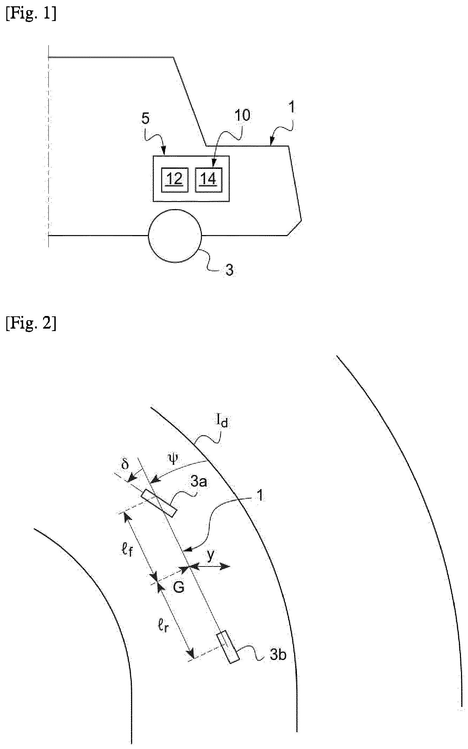

Sur la [Fig.1], on a représenté un véhicule automobile 1 (également appelé dans la suite « véhicule 1 »). Classiquement ce véhicule automobile 1 comporte quatre roues 3, un châssis qui supporte notamment un groupe motopropulseur (à savoir un moteur et des moyens de transmission du couple moteur aux roues motrices), un système de direction (muni par exemple d'une colonne de direction), des éléments de carrosserie, et des éléments d'habitacle.

Comme cela est représenté sur la [Fig.1], le véhicule 1 comprend également une unité de commande 5. L'unité de commande 5 permet de contrôler et commander différents organes du véhicule 1. Par exemple, l'unité de commande 5 peut recevoir des informations en provenance de différents capteurs numériques présents dans le véhicule 1, comme un capteur de vitesse ou un capteur mesurant un angle de braquage des roues avant du véhicule 1.

L'unité de commande 5 peut également commander un actionneur couplé à la colonne de direction du véhicule 1 en lui communiquant par exemple une consigne de commande. L'unité de commande 5 comporte pour cela un dispositif 10 de contrôle de la trajectoire. Le dispositif 10 de contrôle de la trajectoire est adapté à générer la consigne de commande. Par exemple, dans le cas d'un véhicule autonome ou semi-autonome, le dispositif 10 de contrôle de la trajectoire permet de générer une consigne de commande de trajectoire afin d'assurer l'orientation ou le maintien du véhicule 1 dans une voie de circulation, en particulier dans un virage de cette voie de circulation.

Le dispositif 10 de contrôle comprend ici un calculateur 12 et une mémoire 14. La mémoire 14 est munie d'une base de données. Grâce à sa mémoire, le calculateur 12 mémorise une application informatique, constituée de programmes d'ordinateur comprenant des instructions dont l'exécution par le processeur permet la mise en œuvre par le calculateur 12 du procédé décrit ci-après.

La trajectoire du véhicule 1 est modélisée ici par un modèle dit « bicyclette ». La [Fig.2] est une représentation du modèle « bicyclette » appliqué au véhicule 1 se déplaçant dans une voie de circulation. Dans le cadre de ce modèle, le véhicule 1 est modélisé par un cadre et deux roues (comme pour une bicyclette) : la roue avant 3a directrice et la roue arrière 3b non directrice.

Pour la suite, les équations introduites correspondent à des équations matricielles.

Les variables considérées dans ce modèle sont les suivantes :

- une vitesse de lacet, notée d$\psi$/dt, du véhicule 1, correspondant à la vitesse de rotation du véhicule 1 autour de son centre de gravité G selon un axe vertical,
- un angle de cap, noté $\psi$, correspondant à l'angle entre l'axe longitudinal du véhicule 1 et la tangente à la trajectoire,
- une vitesse latérale du véhicule 1, notée ẏ, liée à l'éloignement du centre de gravité G du véhicule 1 par rapport à une trajectoire idéale I$_d$,
- un écart latéral, noté y, correspondant à l'écart entre le centre de gravité G du véhicule 1 et la trajectoire idéale I$_d$,
- une vitesse de rotation, notée d$\delta$/dt, de la roue avant 3a par rapport à l'axe vertical,
- un angle, noté $\delta$, de la roue avant 3a, c'est-à-dire l'angle que fait la roue avant 3a avec l'axe longitudinal du véhicule 1, et
- une intégrale d'erreur de position qui correspond à l'intégrale temporelle des écarts du centre de gravité G du véhicule 1 par rapport à la trajectoire idéale I$_d$ sur laquelle il devrait être, cette intégrale d'erreur étant notée :

[Math.1]
$$\int - y\,dt$$

Le véhicule 1 est donc représenté par une donnée communément appelée vecteur d'état (et ci-après appelée « donnée d'état X »), définie par :

[Math.2]
$$X = \begin{vmatrix} d\psi/dt \\ \psi \\ \dot{y} \\ y \\ d\delta/dt \\ \delta \\ \int - y\,dt \end{vmatrix}$$

D'après le modèle « bicyclette », l'équation de la trajectoire du véhicule 1 est donnée par :

[Math.3]
$$\dot{X} = AX + B\delta_{req} + B_\rho\rho$$

avec :

- $\delta_{req}$ (en radians, noté rad dans la suite) une consigne d'angle sur la roue avant 3a (donc une consigne de commande) afin que le véhicule 1 maintienne ou se rapproche de la trajectoire idéale I$_d$ dans la voie de circulation,
- $\rho$ (en m$^{-1}$) la courbure de la voie de circulation (et également la courbure de la trajectoire dans le modèle « bicyclette »),
- $B_\rho$ une donnée de perturbation (en particulier liée à la courbure de la voie de circulation), et
- A une donnée représentative de la relation dynamique avec la donnée d'état X.

La matrice A dépend ici des coefficients de rigidité respectifs c$_f$ et c$_r$ (exprimés en Newton/rad) de dérive des roues avant et arrière du véhicule 1, des distances respectives l$_f$ et l$_r$ entre le centre de gravité G du véhicule et le train avant et entre le centre de gravité G du véhicule 1 et le train arrière 1 (ces distances sont représentées sur la [Fig.2]), de la masse m (en kg) du véhicule 1 et de la vitesse v (en m/s) du véhicule 1 selon la direction longitudinale (aussi appelée vitesse de déplacement du véhicule 1 dans la suite).

Les coefficients de rigidité c$_f$ et c$_r$ de dérive des roues sont des notions bien connues de l'homme du métier. A titre d'exemple, le coefficient de rigidité c$_f$ de dérive des roues avant est ainsi celui qui permet d'écrire l'équation F$_f$ = 2.c$_f$.$\alpha_f$, avec F$_f$ la force latérale de glissement des roues avant et $\alpha_f$ l'angle de dérive des roues avant.

Dans le cadre du modèle « bicyclette », une donnée de mesure $Y_1$ est également exprimée en fonction de la donnée d'état X par la relation : $Y_1=C.X$ avec C une donnée comprenant les mesures accessibles grâce aux différents capteurs numériques inclus dans le véhicule 1.

Pour la suite de l'invention, on définit également :

- une accélération latérale du véhicule 1 correspondant à la composante normale de l'accélération du véhicule 1 (donc normale à la trajectoire) dans le repère lié au véhicule 1, et
- une accélération transversale du véhicule 1 correspondant à l'accélération agissant sur le véhicule 1 de manière perpendiculaire au sens de déplacement du véhicule 1 par rapport au repère lié au sol.

Ce modèle « bicyclette » est ensuite utilisé dans une loi de commande de la trajectoire du véhicule 1, enregistrée dans l'unité de commande 5. Cette loi de commande permet, par exemple, de maintenir le véhicule 1 au centre de la voie de circulation, que le véhicule 1 se déplace en ligne droite ou dans une portion en virage.

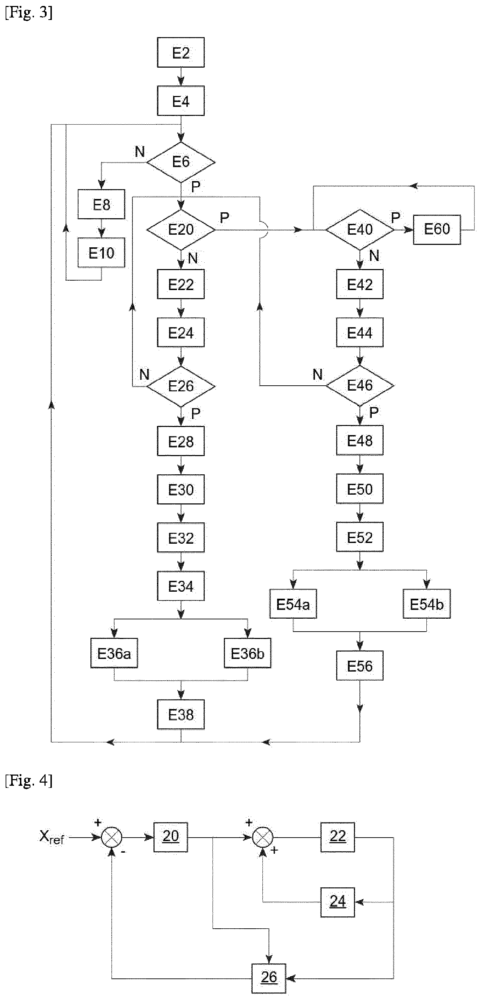

La [Fig.4] représente un schéma fonctionnel en boucle fermée de cette loi de commande.

Sur la [Fig.4], $X_{ref}$ correspond à la trajectoire idéale du véhicule 1 dans sa voie de circulation. En pratique, il s'agit souvent de la trajectoire passant par le centre de la voie de circulation empruntée par le véhicule 1. Cette trajectoire idéale est celle que l'unité de commande 5 souhaite faire atteindre (ou maintenir) par le véhicule 1.

Pour cela, la loi de commande se présente sous forme d'un procédé bouclé. D'après la [Fig.4], l'état du véhicule 1, et en particulier la trajectoire du véhicule 1, est donné par un élément 22. Cet élément 22 est en pratique lié à l'unité de commande 5 qui va commander la trajectoire du véhicule 1 de manière à satisfaire les équations (sur la donnée d'état X et la donnée de mesure $Y_1$) issues du modèle « bicyclette » précédemment décrit en respectant la consigne d'angle de braquage $\delta_{req}$ sur la roue avant.

Le schéma fonctionnel représenté sur la [Fig.4] montre également la présence d'un élément 26 observateur. Cet élément 26 permet de fournir une estimation de l'état du véhicule 1. En pratique, l'élément 26 est lié aux différents capteurs numériques présents dans le véhicule 1 et reçoit donc toutes les mesures concernant le véhicule 1.

L'élément 26 reçoit également de l'élément 22 les informations transmises par l'unité de commande 5 concernant la commande de trajectoire.

L'élément 26 génère ensuite une trajectoire estimée du véhicule 1 par l'intermédiaire d'une donnée estimée $X_{est}$. Pour cela, l'élément 26 génère une donnée d'observation $L_P$ qui regroupe les mesures concernant le véhicule 1 ainsi que des variables nécessaires à la définition de la loi de commande et estimées à partir de ces mesures. La donnée d'observation $L_P$ dépend de la vitesse de déplacement du véhicule 1.

En d'autres termes, une donnée d'observation $L_P$ est déterminée par vitesse de déplacement du véhicule 1 considérée. La donnée estimée $X_{est}$ vérifie alors l'équation suivante :

[Math.4]
$$\dot{X}_{est} = \left( A - L_p C \right) X_{est} + B\delta_{FBK} + L_p Y_1$$

avec $L_P$ une valeur de gain associée à l'élément 26 observateur.

Comme représenté sur la [Fig.4], la donnée estimée $X_{est}$ est ensuite comparée à la trajectoire idéale $X_{ref}$. L'écart entre l'estimation de trajectoire et la trajectoire idéale est traité au niveau d'un élément 20. Cet élément 20 est adapté à générer une nouvelle consigne de commande, par exemple une nouvelle consigne de commande concernant une composante $\delta_{FBK}$ de l'angle de braquage $\delta_{req}$ de la roue avant. Pour cela, l'élément 20 s'appuie sur une donnée de régulation $K_S$. La nouvelle consigne de commande concernant la composante $\delta_{FBK}$ de l'angle de braquage $\delta_{req}$ de la roue avant est obtenue en multipliant l'écart entre l'estimation de trajectoire $X_{est}$ et la trajectoire idéale $X_{ref}$ par la donnée de régulation $K_S$. La nouvelle consigne de commande dépend donc de la donnée de régulation $K_S$. Cette donnée de régulation $K_S$ s'exprime en pratique sous la forme d'une matrice.

La donnée de régulation $K_S$ est dépendante de la vitesse observée par le véhicule 1. En d'autres termes, la loi de commande illustrée sur la [Fig.4] utilise différentes valeurs de donnée de régulation $K_S$, chacune de ces valeurs étant associées à une vitesse de déplacement du véhicule 1.

Les valeurs de la donnée de régulation $K_S$, associées à chacune des vitesses de déplacement considérées, sont déterminées lors de la conception du véhicule 1. Elles sont donc fixées avant l'utilisation du véhicule 1. La consigne de commande concernant la composante $\delta_{FBK}$ de l'angle de braquage $\delta_{req}$ de la roue avant générée à partir de la donnée de régulation $K_S$ est donc qualifiée de prédictive.

La [Fig.4] montre également la présence d'un élément 24 anticipateur. Cet élément 24 permet notamment de prendre en compte la courbure de la voie de circulation, en évaluant une composante $\delta_{FFD}$ de l'angle de braquage $\delta_{req}$ de la roue avant nécessaire pour emprunter cette voie de circulation.

En utilisant les équations introduites pour décrire le modèle « bicyclette » en régime permanent, le véhicule 1 étant au centre du virage ($\dot{y}$=0, y=0 et d$\delta$/dt=0), la consigne concernant la composante $\delta_{FFD}$ de l'angle de braquage $\delta_{req}$ de la roue avant déterminée par l'élément 24 anticipateur s'écrit de la manière suivante :

[Math.5]
$$\delta_{FFD} = \rho \left( L + \nabla_{SV} v^2 \right)$$

avec :

- L (en m) l'empattement du véhicule 1, et
- $\nabla_{SV}$ le gradient de sous-virage propre au véhicule 1 et défini par l'expression suivante :

[Math.6]
$$\nabla_{SV} = \frac{M_f}{C_f} - \frac{M_r}{C_r}$$

avec $M_f$ et $M_r$ (en kg) les masses appliquées respectivement sur le train avant et le train arrière du véhicule 1.

L'élément 24 anticipateur est également est lié aux différents capteurs numériques présents dans le véhicule 1 et reçoit donc toutes les mesures concernant le véhicule 1.

Comme le montre la [Fig.4], l'angle à appliquer au volant (donc la consigne d'angle $\delta_{req}$ à transmettre à la roue) pour que le véhicule 1 se déplace dans un virage présentant une courbure $\rho$ connue dépend finalement des deux composantes respectivement déterminées par l'élément 26 observateur ($\delta_{FBK}$) et par l'élément 24 anticipateur ($\delta_{FFD}$) :

[Math.7]
$$\delta_{req} = \delta_{FBK} + \delta_{FFD}$$

L'invention vise donc ici à déterminer cet angle à appliquer au volant (donc la consigne d'angle $\delta_{req}$ à transmettre à la roue) pour que le véhicule 1 se déplace dans un virage présentant une courbure $\rho$ connue.

Le calculateur 12 du dispositif 10 de contrôle (et de manière plus générale l'unité de commande 5) est adapté à mettre en œuvre le procédé de contrôle de la trajectoire du véhicule automobile 1.

Le procédé exécuté par le calculateur 12 est adapté à contrôler, en temps réel, la trajectoire du véhicule automobile 1 dans la voie de circulation, en particulier dans un virage. On entend ici par l'expression « temps réel », le fait que la trajectoire du véhicule automobile 1 puisse être contrôlée de manière régulière lors du déplacement du véhicule 1 dans la voie de circulation.

Pour cela, le calculateur 12 met en œuvre un procédé comportant plusieurs étapes, qui sont décrites ci-après.

La succession des étapes mises en œuvre dans le cadre de ce procédé est représentée sur la [Fig.3], sous forme d'un logigramme.

Comme le montre la [Fig.3], le procédé débute lors de l'étape E2 lors de laquelle le véhicule automobile 1 est mis en route et commence à se déplacer sur la voie de circulation. On considérera ici que la fonction de suivi de voie autonome est activée.

Afin de déterminer la consigne d'angle de braquage $\delta_{req}$ lors de l'activation de cette fonction, le procédé comprend une étape E4 d'initialisation de la valeur de gradient de sous-virage $\nabla_{SV}$ à partir d'une valeur prédéterminée $\nabla_{SV\_init}$. Cette valeur prédéterminée $\nabla_{SV\_init}$ est par exemple une valeur par défaut mémorisée dans la mémoire 14. Cette valeur prédéterminée $\nabla_{SV\_init}$ dépend par exemple des masses $M_f$ et $M_r$ appliquées respectivement sur le train avant et le train arrière du véhicule 1 et des coefficients de rigidité $c_f$ et $c_r$ correspondant. La consigne générée par l'unité de commande 5 concernant l'angle de braquage $\delta_{req}$ est déterminée sur la base de cette valeur prédéterminée $\nabla_{SV\_init}$. Plus particulièrement, la valeur prédéterminée $\nabla_{SV\_init}$ permet de déterminer la composante $\delta_{FFD}$ de l'angle de braquage $\delta_{req}$ recherché. En parallèle, l'élément 26 observateur estime l'autre composante $\delta_{FBK}$ de l'angle de braquage recherché $\delta_{req}$. La consigne d'angle de braquage $\delta_{req}$ au démarrage est donc obtenue en sommant ces deux composantes. Cette consigne au démarrage est ensuite transmise au système de direction du véhicule automobile 1.

Le procédé se poursuit ensuite par les étapes E6 à E60. Ces étapes E6 à E60 sont mises en œuvre en boucle lors du déplacement du véhicule 1. Plus particulièrement, ces étapes sont mises en œuvre pour chaque pas d'échantillonnage $\delta t$ successifs d'une pluralité de pas d'échantillonnage $\delta t$ de la durée de déplacement du véhicule automobile 1. Ce pas d'échantillonnage $\delta t$ est par exemple de l'ordre de 10 milli-secondes.

Lors de l'étape E6, au pas d'échantillonnage $\delta t$ considéré, le calculateur 12 détecte si la voie de circulation comprend un virage.

Pour détecter la présence d'un virage sur la voie de circulation, le calculateur 12 vérifie au moins les conditions suivantes concernant les paramètres caractéristiques de déplacement du véhicule automobile 1. Ces paramètres caractéristiques de déplacement sont par exemple l'angle des roues avant, la vitesse de lacet du véhicule 1, la vitesse latérale du véhicule 1, l'accélération transversale du véhicule 1 ou encore l'écart latéral. En variante, il pourrait se baser sur des données issues d'un logiciel de cartographie et de navigation.

En particulier, ici, un virage est détecté lorsque l'angle des roues avant, la vitesse de lacet du véhicule 1 et la vitesse latérale du véhicule 1 présente le même signe. Une autre condition de détection d'un virage porte sur la valeur absolue de l'accélération transversale qui est comprise entre une valeur de seuil minimal et une valeur de seuil maximal. La valeur de seuil minimal est par exemple de l'ordre de 0,84 m/s$^2$. La valeur de seuil maximal est par exemple de l'ordre de 1,5 m/s$^2$.

Un virage est également détecté lorsque l'écart latéral est inférieur à une valeur prédéfinie, par exemple inférieure à 1 m.

Un virage est également détecté lorsque la dérivée temporelle de la vitesse de lacet est inférieure à une valeur prédéterminée pendant une certaine durée de temps, par exemple inférieure à 0,05 rad/s$^2$ pendant 1 s.

Cette détection de virage n'est mise en œuvre que dans le cas d'une vitesse de déplacement du véhicule 1 supérieure à un seuil minimal de vitesse de déplacement du véhicule 1, les déplacements à faible vitesse étant peu représentatifs du comportement général de déplacement du véhicule automobile 1 sur la voie de circulation.

Si aucun virage n'est détecté à l'étape E6, c'est-à-dire si le véhicule 1 circule sur une portion droite de la voie de circulation, le procédé se poursuit à l'étape E8. Lors de cette étape, la valeur du gradient de sous-virage $\nabla_{SV\_\delta t}$ est égale à une valeur constante. Cette valeur constante est par exemple la valeur prédéterminée $\nabla_{SV\_init}$ mémorisée dans la mémoire 14. En variante, cette valeur constante peut être une valeur du gradient de sous-virage déterminée pour un pas d'échantillonnage précédent et mémorisée dans la base de données de la mémoire 14 (cette détermination est expliquée ci-après).

Comme le montre la [Fig.3], le procédé comprend ensuite l'étape E10 lors de laquelle la valeur du gradient de sous-virage $\nabla_{SV\_\delta t}$ déterminée à l'étape E8 est utilisée pour déterminer la consigne d'angle de braquage $\delta_{req}$ (selon les équations introduites précédemment) et donc la consigne de commande de la trajectoire du véhicule automobile 1. Plus particulièrement, l'élément 24 anticipateur utilise la valeur du gradient de sous-virage $\nabla_{SV\_\delta t}$ déterminée à l'étape E8 pour déterminer la composante $\delta_{FFD}$ de l'angle de braquage recherché $\delta_{req}$. En parallèle, l'élément 26 observateur estime l'autre composante $\delta_{FBK}$ de l'angle de braquage recherché $\delta_{req}$. La consigne d'angle de braquage $\delta_{req}$ est donc obtenue en sommant ces deux composantes. Cette consigne est ensuite transmise au système de direction du véhicule automobile 1.

Ensuite, le pas d'échantillonnage est incrémenté pour mettre en œuvre les étapes du procédé au pas d'échantillonnage suivant (comme indiqué précédemment, le procédé est mis en œuvre de manière régulière lors du déplacement du véhicule 1 sur la voie de circulation). Le procédé reprend donc ensuite à l'étape E6.

Si, à l'étape E6, le calculateur 12 détecte que le véhicule 1 circule dans un virage, le véhicule 1 emprunte donc le virage détecté et le procédé se poursuit à l'étape E20.

Lors de cette étape, le calculateur 12 évalue si le véhicule automobile 1, pendant son déplacement sur la voie de circulation, a circulé dans un (ou plusieurs) virage(s) pendant une durée prédéterminée $\tau_{app}$ depuis le démarrage du moteur. En d'autres termes, le calculateur 12 détermine ici si le véhicule a circulé en virage (dans un ou plusieurs virages) pendant, au total, au moins cette durée prédéterminée $\tau_{app}$ qui va constituer une période d'apprentissage pour le procédé. Cette durée prédéterminée $\tau_{app}$ est par exemple supérieure à 30 s, par exemple de l'ordre de 50 s.

Si ce n'est pas le cas, le procédé se poursuit à l'étape E22 lors de laquelle le calculateur 12 détermine, pour le pas d'échantillonnage concerné, les valeurs d'une première grandeur $\Phi(\delta t)^T.Y(\delta t)$ et d'une deuxième grandeur $\Phi(\delta t)^T.\Phi(\delta t)$ associées au gradient de sous-virage.

Plus particulièrement, l'équation [Math. 4] peut se réécrire sous la forme suivante, impliquant des variables d'état $\Phi$ et $Y$ caractéristiques du déplacement du véhicule automobile 1 sur sa voie de circulation :

$$[\text{Math.8}]$$
$$Y(\delta t) = \Phi(\delta t).\Theta(\delta t)$$

avec

[Math.9]

$$\Theta(\delta t) = \nabla_{SV}, \quad Y(\delta t) = \delta_{req} - \rho L \; et \; \Phi(\delta t) = \rho v^2$$

Il est alors possible d'isoler le gradient de sous-virage en écrivant :

[Math.10]

$$\Theta(\delta t) = \left(\Phi(\delta t)^T . \Phi(\delta t)\right)^{-1} . \left(\Phi(\delta t)^T Y(\delta t)\right)$$

avec $...^T$ la notation correspondant à la transposée d'une matrice et $...^{-1}$ correspondant à l'inverse d'une matrice.

En pratique, lors de la mise en œuvre du procédé conforme à l'invention, le calculateur 12 cherche à optimiser la valeur du gradient de sous-virage, et donc d'après l'équation précédente, à optimiser la première grandeur $\Phi(\delta t)^T . Y(\delta t)$ et la deuxième grandeur $\Phi(\delta t)^T . \Phi(\delta t)$ associées au gradient de sous-virage.

A l'étape E22, pour le pas d'échantillonnage $\delta t$ concerné, les matrices $Y(\delta t)$ et $\Phi(\delta t)$ sont donc déterminées à partir des valeurs instantanées mesurées des paramètres caractéristiques du véhicule automobile 1 (mesures obtenues par les différents capteurs présents dans le véhicule 1). Les paramètres caractéristiques utilisés sont notamment l'empattement du véhicule 1, la courbure $\rho$ de la voie de circulation et la vitesse $v$ de déplacement du véhicule 1. On note par exemple que la courbure $\rho$ de la voie de circulation est déterminée à partir de l'équation suivante :

[Math.11]

$$\rho = \frac{accélération \; transversale}{v^2}$$

Lors de cette étape, la valeur de l'angle de braquage $\delta_{req}$ utilisée est celle obtenue en boucle ouverte et mesurée au pas d'échantillonnage $\delta t$ par le capteur concerné dans le véhicule automobile 1.

La première grandeur $\Phi(\delta t)^T . Y(\delta t)$ et la deuxième grandeur $\Phi(\delta t)^T . \Phi(\delta t)$ sont ensuite déterminées à partir des valeurs instantanées des matrices $Y(\delta t)$ et $\Phi(\delta t)$ pour le pas d'échantillonnage $\delta t$ par une méthode des moindres carrés récursifs.

Comme le montre la [Fig.3], le procédé se poursuit à l'étape E24. Lors de cette étape, le calculateur 12 mémorise une première valeur stockée $\Phi^T . Y$ et une deuxième valeur stockée $\Phi^T . \Phi$ dans la base de données de la mémoire 14.

La première valeur stockée $\Phi^T . Y$ est fonction de la première grandeur $\Phi(\delta t)^T . Y(\delta t)$ déterminée pour le pas d'échantillonnage $\delta t$ (à l'étape E22) mais également des premières grandeurs déterminées pour les pas d'échantillonnage précédents. Il en est de même pour la deuxième valeur stockée $\Phi^T . \Phi$ qui est fonction de la deuxième grandeur $\Phi(\delta t)^T . \Phi(\delta t)$ déterminée pour le pas d'échantillonnage $\delta t$ (à l'étape E22) et également des deuxièmes grandeurs déterminées pour les pas d'échantillonnage précédents.

Par exemple, la première (respectivement deuxième) valeur stockée $\Phi^T . Y$ (respectivement $\Phi^T . \Phi$) correspond à la somme des premières (respectivement deuxièmes) grandeurs déterminées pour l'ensemble des pas d'échantillonnage jusqu'au pas d'échantillonnage courant.

En pratique dans ce cas, le calculateur 12 mémorise le résultat de la somme entre la première valeur stockée mémorisée au pas d'échantillonnage précédent (résultant lui-même de la somme des précédentes premières valeurs stockées) et de la première grandeur $\Phi(\delta t)^T . Y(\delta t)$ déterminée pour le pas d'échantillonnage $\delta t$ courant.

En variante, la première (respectivement deuxième) valeur stockée $\Phi^T . Y$ peut correspondre à la moyenne des premières (respectivement deuxièmes) grandeurs déterminées pour l'ensemble des pas d'échantillonnage jusqu'au pas d'échantillonnage courant.

Il est par exemple en outre considéré ici, qu'au démarrage du véhicule automobile 1, la première grandeur $\Phi(\delta t)^T . Y(\delta t)$ et la deuxième grandeur $\Phi(\delta t)^T . \Phi(\delta t)$ sont nulles. La première valeur stockée $\Phi^T . Y$ et la deuxième valeur stockée $\Phi^T . \Phi$ déterminées au premier pas d'échantillonnage de virage dépend donc directement des valeurs instantanées des matrices $Y(\delta t)$ et $\Phi(\delta t)$ déterminées pour ce premier pas d'échantillonnage en virage.

Le procédé se poursuit ensuite à l'étape E26 lors de laquelle le calculateur 12 détermine si le véhicule automobile 1 est sorti du virage détecté à l'étape E6.

Si ce n'est pas le cas, c'est-à-dire si le véhicule automobile 1 emprunte encore le virage détecté à l'étape E6, le procédé reprend à l'étape E20.

En revanche, si le véhicule automobile 1 a quitté le virage qu'il empruntait, le procédé se poursuit à l'étape E28. Cela signifie donc que le véhicule automobile 1 circule à présent en ligne droite.

Lors de cette étape, le calculateur 12 actualise la valeur du gradient de sous-virage $V_{SV\_\delta t\_act}$ qui est utilisée pour déterminer la composante $\delta_{FFD}$ (et donc la consigne de l'angle de braquage $\delta_{req}$). Il faut donc noter ici que l'actualisation de la valeur du gradient de sous-virage s'effectue uniquement lorsque le véhicule automobile 1 circule en ligne droite (donc entre deux virages consécutifs). De manière avantageuse, la valeur du gradient de sous-virage est actualisée d'un virage à l'autre, lors du déplacement du véhicule automobile 1. Cela permet notamment d'empêcher des changements brutaux dans la consigne de commande de la trajectoire du véhicule automobile 1 en virage, et donc de garantir le confort des occupants du véhicule 1.

La valeur du gradient de sous-virage actualisée $\nabla_{SV\_\delta t\_act}$ dépend ici de la première valeur stockée $\Phi^T.Y$ et de la deuxième valeur stockée $\Phi^T.\Phi$ déterminées à l'étape E24, donc déterminées dans le virage que le véhicule 1 vient de quitter. Plus particulièrement, la valeur du gradient de sous-virage actualisée $\nabla_{SV\_\delta t\_act}$ est déterminée comme le rapport entre la première valeur stockée $\Phi^T.Y$ et la deuxième valeur stockée $\Phi^T.\Phi$ :

$$[\text{Math.12}]$$

$$\nabla_{SV\_\delta t\_act} = \frac{\Phi^T \Phi}{\Phi^T Y}$$

Cependant, comme il a été déterminé à l'étape E20 que le temps de circulation du véhicule 1 dans un ou plusieurs virages n'avait pas atteint la durée prédéterminée $\tau_{app}$, il est considéré que la période d'apprentissage du procédé n'est pas terminée. La valeur du gradient de sous-virage $\nabla_{SV\_\delta t\_act}$ déterminée à l'étape E28 n'est pas considérée comme optimale et doit donc être corrigée.

Pour cela, à l'étape E30, une étape de correction de la valeur du gradient de sous-virage $\nabla_{SV\_\delta t\_act}$ déterminée à l'étape E28 afin de déterminer une valeur intermédiaire du gradient de sous-virage $\nabla_{SV\_\delta t\_int}$. Cette valeur intermédiaire du gradient de sous-virage $\nabla_{SV\_\delta t\_int}$ est déterminée sur la base d'une pondération entre la valeur du gradient de sous-virage $\nabla_{SV\_\delta t\_act}$ déterminée à l'étape E28 et la valeur prédéterminée $\nabla_{SV\_init}$ utilisée à l'étape E4 d'initialisation. En d'autres termes, un facteur d'ajustement est appliqué afin de limiter les erreurs d'estimation de la valeur du gradient de sous-virage lorsque peu de données en virage ont été acquises. Cet ajustement, lors d'une période d'apprentissage ayant une durée prédéterminée $\tau_{app}$, permet alors de faire converger de manière linéaire et progressive la valeur de gradient de sous-virage afin de permettre la génération de consigne de commande la plus régulière et fluide possible (sans à-coup ressenti par les occupants du véhicule 1).

Le procédé se poursuit ensuite à l'étape une étape E32 de détermination d'une première valeur d'accélération et d'une deuxième valeur d'une autre accélération du véhicule 1 pour le pas d'échantillonnage considéré. L'accélération est par exemple ici l'accélération latérale du véhicule 1 et l'autre accélération est l'accélération transversale du véhicule 1. Le calculateur 12 détermine ensuite la différence entre la première accélération et la deuxième accélération.

A l'étape E34, cette différence est comparée à un seuil prédéterminé d'accélération. Ce seuil prédéterminé d'accélération permet d'identifier une éventuelle erreur d'estimation du gradient de sous-virage, telle qu'elle pourrait être observée en cas de chargement de masse importante dans le véhicule automobile 1 ou en cas d'un virage dit serré (dans lequel l'accélération latérale serait importante). Ce seuil prédéterminé d'accélération se présente par exemple ici sous la forme d'une cartographie. Cette cartographie indique par exemple que pour une différence entre la première accélération et la deuxième accélération inférieure à un seuil prédéterminé d'environ 0,2 m/s², aucune correction n'est apportée à la valeur intermédiaire du gradient de sous-virage $V_{SV\_\delta t\_int}$. La valeur finale du gradient de sous-virage $\nabla_{SV\_\delta t\_fin}$ est donc égale à la valeur intermédiaire du gradient de sous-virage $\nabla_{SV\_\delta t\_int}$ (étape E36a).

Cependant, si la différence entre la première accélération et la deuxième accélération est supérieure à ce seuil prédéterminé d'environ 0,2 m/s², la valeur intermédiaire du gradient de sous-virage $\nabla_{SV\_\delta t\_int}$ est corrigée d'une valeur de correction qui est ajoutée à cette valeur intermédiaire (étape E36b). Cette valeur de correction est donnée par exemple par la cartographie mentionnée. Par exemple, pour une différence entre la première accélération et la deuxième accélération supérieure à 1 m/s², la valeur de correction du gradient de sous-virage est de l'ordre de $1,7.10^{-3}$ rad.s²/m. La valeur finale du gradient de sous-virage $\nabla_{SV\_\delta t\_fin}$ est donc égale à la valeur intermédiaire du gradient de sous-virage $\nabla_{SV\_\delta t\_int}$ à laquelle est ajoutée cette valeur de correction.

Puis, le calculateur 12 utilise la valeur finale du gradient de sous-virage $\nabla_{SV\_\delta t\_fin}$ (corrigée ou non de la valeur de correction) pour déterminer la consigne d'angle de braquage $\delta_{req}$ (selon les équations introduites précédemment) et donc la consigne de commande de la trajectoire du véhicule automobile 1 (étape E38).

Plus particulièrement, de manière similaire à ce qui est décrit pour l'étape E10 précédemment introduite, l'élément 24 anticipateur utilise la valeur finale du gradient de sous-virage $\nabla_{SV\_\delta t\_fin}$ obtenue à l'étape E36a ou E36b pour

déterminer la composante $\delta_{FFD}$ de l'angle de braquage recherché $\delta_{req}$. En parallèle, l'élément 26 observateur estime l'autre composante $\delta_{FBK}$ de l'angle de braquage recherché $\delta_{req}$. La consigne d'angle de braquage $\delta_{req}$ est donc obtenue en sommant ces deux composantes. Cette consigne est ensuite transmise au système de direction du véhicule automobile 1.

Ensuite, le pas d'échantillonnage est incrémenté pour mettre en œuvre les étapes du procédé au pas d'échantillonnage suivant (comme indiqué précédemment, le procédé est mis en œuvre de manière régulière lors du déplacement du véhicule 1 sur la voie de circulation). Le procédé reprend donc ensuite à l'étape E6.

Si à l'étape E20, le calculateur 12 évalue que le véhicule automobile 1, pendant son déplacement sur la voie de circulation, a circulé dans un (ou plusieurs) virage(s) pendant une durée égale à au moins la durée prédéterminée $\tau_{app}$, le procédé se poursuit à l'étape E40.

Lors de cette étape E40, le calculateur 12 détermine si une durée totale $\tau_{tot}$ de circulation dans un ou plusieurs virages a été atteinte depuis la dernière mise à jour de la base de données. Cette durée totale $\tau_{tot}$ est ici supérieure à 50 secondes.

La durée totale $\tau_{tot}$ est par exemple proportionnelle à la durée prédéterminée $\tau_{app}$ correspondant à la période d'apprentissage. Pour une durée prédéterminée $\tau_{app}$ de 50 s, la durée totale $\tau_{tot}$ est par exemple de 100 s. Dans un autre exemple, pour une durée prédéterminée de 30 s, la durée totale $\tau_{tot}$ est de 70 s.

Si la durée totale $\tau_{tot}$ de circulation en virage n'a pas été atteinte depuis la dernière mise à jour de la base de données, le procédé se poursuit avec les étapes E42 et E44 respectivement similaires aux étapes E22 et E24 décrites précédemment. A l'issue de l'étape E44, le calculateur 12 mémorise donc une première valeur stockée $\Phi^T.Y$ et une deuxième valeur stockée $\Phi^T.\Phi$ dans la base de données de la mémoire 14, ces valeurs étant issues des mesures acquises au pas d'échantillonnage courant $\delta t$.

Comme lors de l'étape E26 précédemment décrite, le calculateur 12 détermine, à l'étape E46, si le véhicule automobile 1 est sorti du virage détecté à l'étape E6.

Si ce n'est pas le cas, c'est-à-dire si le véhicule automobile 1 emprunte encore le virage détecté à l'étape E6, le procédé reprend à l'étape E20.

En revanche, si le véhicule automobile 1 a quitté le virage qu'il empruntait, le procédé se poursuit à l'étape E48. Cela signifie donc que le véhicule automobile 1 circule à présent en ligne droite.

Lors de cette étape E48, le calculateur 12 actualise la valeur du gradient de sous-virage $\nabla_{SV\_\delta t\_act}$ qui est utilisée pour déterminer la composante $\delta_{FFD}$ de manière similaire à l'étape E28 décrite précédemment.

Comme le montre la [Fig.3], une fois cette valeur du gradient de sous-virage actualisée, le procédé se poursuit avec les étapes E50, E52, E54a et E54b permettant de déterminer la valeur finale du gradient de sous-virage à partir de la valeur du gradient de sous-virage $\nabla_{SV\_\delta t\_act}$ actualisée obtenue à l'étape E48, de manière similaire à ce qui est décrit précédemment respectivement, aux étapes E32, E34, E36a et E36b.

Puis, à l'étape E56, le calculateur 12 utilise cette valeur finale du gradient de sous-virage $\nabla_{SV\_\delta t\_fin}$ (corrigée ou non avec la valeur de correction) pour déterminer la consigne d'angle de braquage $\delta_{req}$ (selon les équations introduites précédemment) et donc la consigne de commande de la trajectoire du véhicule automobile 1 (de manière similaire à l'étape E38 décrite précédemment).

Ensuite, le pas d'échantillonnage est incrémenté pour mettre en œuvre les étapes du procédé au pas d'échantillonnage suivant (comme indiqué précédemment, le procédé est mis en œuvre de manière régulière lors du déplacement du véhicule 1 sur la voie de circulation). Le procédé reprend donc ensuite à l'étape E6.

Si à l'étape E40, la durée totale $\tau_{tot}$ de circulation en virage a été atteinte depuis la dernière mise à jour de la base de données, le procédé se poursuit à l'étape E60, lors de laquelle la base de données est mise à jour.

Au début de l'étape E60, la base de données mémorise la première valeur stockée $\Phi^T.Y$ et la deuxième valeur stockée $\Phi^T.\Phi$ déterminées au précédent pas d'échantillonnage.

Lors de l'étape E60, la calculateur 12 met donc à jour chacune de la première valeur stockée $\Phi^T.Y$ et de la deuxième valeur stockée $\Phi^T.\Phi$.

En pratique, le calculateur 12 détermine d'une part, une première valeur intermédiaire (respectivement une deuxième valeur intermédiaire) proportionnelle à la première valeur stockée $\Phi^T.Y$ (respectivement à la deuxième valeur stockée $\Phi^T.\Phi$). Le coefficient de proportionnalité appliqué est par exemple fonction du rapport entre la durée prédéterminée $\tau_{app}$ et la durée totale $\tau_{tot}$.

Par exemple, dans le cas où la durée prédéterminée $\tau_{app}$ est égale à 50 s et la durée totale $\tau_{tot}$ est égale à 100 s, le coefficient de proportionnalité appliqué est de ½. La première valeur intermédiaire (respectivement la deuxième valeur intermédiaire) est donc égale à la moitié de la première valeur stockée $\Phi^T.Y$ (respectivement à la moitié de la deuxième valeur stockée $\Phi^T.\Phi$).

A l'étape E60, la première valeur stockée $\Phi^T.Y$ et de la deuxième valeur stockée $\Phi^T.\Phi$ sont donc chacune actualisées respectivement par la première valeur intermédiaire et la deuxième valeur intermédiaire (par écrasement). La dénomination de « première valeur stockée $\Phi^T.Y$ » et de « deuxième valeur stockée $\Phi^T.\Phi$ » sont donc conservées à l'issue de l'étape E60.

Comme le montre la [Fig.3], le procédé reprend ensuite à l'étape E40.

**Revendications**

1. Procédé de contrôle de la trajectoire d'un véhicule automobile (1) circulant sur une voie de circulation, comprenant une étape de :

   - détection d'un virage de la voie de circulation, puis, lorsque le véhicule automobile (1) emprunte ledit virage, **caractérisé en ce qu'**il comporte en outre des étapes de :

      - détermination d'une première grandeur et d'une deuxième grandeur pour une pluralité de pas d'échantillonnage successifs, à partir de variables d'état ($\Phi$, Y) caractéristiques du déplacement du véhicule automobile (1),
      - détermination d'une première valeur stockée et d'une deuxième valeur stockée, ladite première valeur stockée étant fonction de la première grandeur déterminée au pas d'échantillonnage courant et de premières grandeurs déterminées pour au moins un des pas d'échantillonnage précédents, ladite deuxième valeur stockée étant fonction de la deuxième grandeur déterminée au pas d'échantillonnage courant et de deuxièmes grandeurs déterminées pour au moins un des pas d'échantillonnage précédents,
      - mémorisation desdites première valeur stockée et deuxième valeur stockée déterminées pour chaque pas d'échantillonnage, puis

   lorsque le véhicule automobile (1) quitte ledit virage :

      - détermination d'une valeur du gradient de sous-virage ($\nabla_{SV\_\delta t\_act}$) en fonction desdites première valeur stockée et deuxième valeur stockée mémorisées, et
      - détermination d'une commande du véhicule automobile (1) sur la base de la valeur du gradient de sous-virage ($\nabla_{SV\_\delta t\_act}$) déterminée.

2. Procédé selon la revendication 1, dans lequel la première valeur stockée est fonction de la somme de la première grandeur déterminée au pas d'échantillonnage courant et de premières grandeurs déterminées pour au moins un des pas d'échantillonnage précédents et la deuxième valeur stockée ($\Phi^T.\Phi$) est fonction de la somme de la deuxième grandeur déterminée au pas d'échantillonnage courant et de deuxièmes grandeurs déterminées pour au moins un des pas d'échantillonnage précédents.

3. Procédé selon la revendication 1 ou 2, dans lequel les variables d'état ($\Phi$, Y) caractéristiques du déplacement du véhicule automobile (1) sont fonction d'une composante ($\delta_{FFD}$) d'un angle de braquage d'une roue du véhicule automobile (1), d'une courbure de la voie de circulation, d'une vitesse (v) de déplacement du véhicule automobile (1) ou d'un empattement (L) du véhicule automobile (1).

4. Procédé selon l'une quelconque des revendications 1 à 3, dans lequel l'étape de détermination de la valeur du gradient de sous-virage est mise en œuvre d'un virage à un autre virage emprunté par le véhicule automobile (1).

5. Procédé selon l'une quelconque des revendications 1 à 4, comprenant également une étape de correction de la valeur du gradient de sous-virage afin de déterminer une valeur intermédiaire du gradient de sous-virage ($\nabla_{SV\_\delta t\_int}$), ladite valeur intermédiaire du gradient de sous-virage ($\nabla_{SV\_\delta t\_int}$) étant déterminée sur la base d'une pondération entre la valeur du gradient de sous-virage déterminée ($\nabla_{SV\_\delta t\_act}$) et une valeur prédéterminée.

6. Procédé selon l'une quelconque des revendications 1 à 5, dans lequel la valeur du gradient de sous-virage ($\nabla_{SV\_\delta t\_act}$) est déterminée sur la base d'un rapport entre la première valeur stockée et la deuxième valeur stockée.

7. Procédé selon l'une quelconque des revendications 1 à 6, comprenant également des étapes de :

      - détermination d'une première valeur d'accélération et d'une deuxième valeur d'une autre accélération du véhicule automobile,
      - détermination d'une différence entre la première valeur d'accélération et la deuxième valeur de l'autre accélération,
      - si la différence déterminée est supérieure à un seuil prédéterminé, autre correction de la valeur du gradient de sous-virage à partir d'une valeur de correction fonction de ladite différence déterminée.

8. Procédé selon l'une quelconque des revendications 1 à 7, dans lequel la détection du virage dépend de paramètres caractéristiques du déplacement du véhicule automobile (1), une partie au moins des paramètres étant choisis parmi un angle d'une roue avant du véhicule automobile (1), une vitesse de lacet du véhicule automobile (1), un écart latéral entre le centre de gravité (G) du véhicule automobile (1) et une trajectoire idéale, une accélération transversale du véhicule automobile (1) ou une vitesse de déplacement du véhicule automobile (1).

9. Procédé selon l'une quelconque des revendications 1 à 8, dans lequel la première grandeur et la deuxième grandeur sont déterminées à partir d'une méthode des moindres carrés récursifs fonction de variables d'état ($\Phi$, Y) caractéristiques du déplacement du véhicule automobile (1).

10. Procédé selon l'une quelconque des revendications 1 à 9, dans lequel l'étape de détermination de la commande du véhicule automobile (1) comprend une sous-étape de détermination d'une composante ($\delta_{FFD}$) d'un angle de braquage d'une roue du véhicule automobile (1).

11. Dispositif de contrôle (10) de la trajectoire d'un véhicule automobile (1) circulant sur une voie de circulation, comprenant un calculateur (12) et une mémoire (14) munie d'une base de données présentant un nombre d'emplacements fini, ledit calculateur (12) étant conçu pour :

    - détecter un virage de la voie de circulation, puis, lorsque le véhicule automobile (1) emprunte ledit virage,
    - déterminer une première grandeur et une deuxième grandeur pour une pluralité de pas d'échantillonnage successifs, à partir de variables d'état ($\Phi$, Y) caractéristiques du déplacement du véhicule automobile (1),
    - déterminer une première valeur stockée et une deuxième valeur stockée, ladite première valeur stockée étant fonction de la première grandeur déterminée au pas d'échantillonnage courant et de premières grandeurs déterminées pour au moins un des pas d'échantillonnage précédents, ladite deuxième valeur stockée étant fonction de la deuxième grandeur déterminée au pas d'échantillonnage courant et de deuxièmes grandeurs déterminées pour au moins un des pas d'échantillonnage précédents,
    - mémoriser lesdites première valeur stockée et deuxième valeur stockée ($\Phi^T.\Phi$) déterminées pour chaque pas d'échantillonnage, puis

    lorsque le véhicule automobile (1) quitte ledit virage :

    - déterminer une valeur du gradient de sous-virage ($\nabla_{SV\_\delta t\_act}$) en fonction desdites première valeur stockée et deuxième valeur stockée mémorisées, et
    - déterminer une commande du véhicule automobile (1) sur la base de la valeur du gradient de sous-virage ($\nabla_{SV\_\delta t\_act}$) déterminée.

12. Véhicule automobile (1) comprenant un groupe motopropulseur, un système de direction et un dispositif de contrôle (10) en temps réel de la trajectoire selon la revendication 11 adapté à commander le système de direction.

**Patentansprüche**

1. **Verfahren** zum Überwachen des Fahrwegs eines auf einer Fahrspur fahrenden Kraftfahrzeugs (1), umfassend einen Schritt:

    - Erkennen einer Kurve der Fahrspur, dann, wenn das Kraftfahrzeug (1) die Kurve befährt,
    **dadurch gekennzeichnet, dass** es ferner die folgenden Schritte umfasst:

    - Bestimmen einer ersten Größe und einer zweiten Größe für eine Vielzahl von aufeinanderfolgenden Abtastschritten aus Zustandsvariablen ($\Phi$, Y), die charakteristisch für die Bewegung des Kraftfahrzeugs (1) sind,
    - Bestimmen eines ersten gespeicherten Werts und eines zweiten gespeicherten Werts, wobei der erste gespeicherte Wert eine Funktion der ersten Größe, die in dem aktuellen Abtastschritt bestimmt wurde, und der ersten Größen ist, die für mindestens einen der vorherigen Abtastschritte bestimmt wurden, wobei der zweite gespeicherte Wert eine Funktion der zweiten Größe, die in dem aktuellen Abtastschritt bestimmt wurde, und der zweiten Größen ist, die für mindestens einen der vorherigen Abtastschritte bestimmt wurden,
    - Speichern des ersten gespeicherten Werts und des zweiten gespeicherten Werts, die für jeden Abtastschritt bestimmt wurden, dann

wenn das Kraftfahrzeug (1) die Kurve verlässt:

- Bestimmen eines Werts des Untersteuerungsgradienten ($\nabla_{sv\_\delta t\_act}$) in Abhängigkeit von dem ersten gespeicherten Wert und dem zweiten gespeicherten Wert, und
- Bestimmen einer Steuerung des Kraftfahrzeugs (1) auf Basis des bestimmten Werts des Untersteuerungsgradienten ($\nabla_{sv\_\delta t\_act}$).

2. Verfahren nach Anspruch **1,** wobei der erste gespeicherte Wert eine Funktion der Summe aus der ersten Größe, die in dem aktuellen Abtastschritt bestimmt wurde, und der ersten Größen ist, die für mindestens einen der vorherigen Abtastschritte bestimmt wurden, und der zweite gespeicherte Wert ($\Phi^T.\Phi$) eine Funktion der Summe aus der zweiten Größe, die in dem aktuellen Abtastschritt bestimmt wurde, und der zweiten Größen ist, die für mindestens einen der vorherigen Abtastschritte bestimmt wurden.

3. **Verfahren** nach Anspruch 1 oder 2, wobei die für die Bewegung des Kraftfahrzeugs (1) charakteristischen Zustandsvariablen ($\Phi$, Y) von einer Komponente ($\delta_{FFD}$) eines Lenkwinkels eines Rades des Kraftfahrzeugs (1), einer Krümmung der Fahrspur, einer Bewegungsgeschwindigkeit (v) des Kraftfahrzeugs (1) oder einem Radstand (L) des Kraftfahrzeugs (1) abhängen.

4. Verfahren nach einem der Ansprüche 1 bis 3, wobei der Schritt des Bestimmens des Werts des Untersteuerungsgradienten von einer Kurve zu einer anderen Kurve, die vom Kraftfahrzeug (1) gefahren wird, durchgeführt wird.

5. Verfahren nach einem der Ansprüche 1 bis 4, ferner umfassend einen Schritt des Korrigierens des Werts des Untersteuerungsgradienten, um einen Zwischenwert des Untersteuerungsgradienten ($\nabla_{sv\_\delta t\_int}$) zu bestimmen, wobei der Zwischenwert des Untersteuerungsgradienten ($\nabla_{sv\_\delta t\_int}$) auf Basis einer Gewichtung zwischen dem bestimmten Wert des Untersteuerungsgradienten ($\nabla_{sv\_\delta t\_act}$) und einem vorbestimmten Wert bestimmt wird.

6. Verfahren nach einem der Ansprüche 1 bis 5, wobei der Wert des Untersteuerungsgradienten ($\nabla_{sv\_\delta t\_act}$) auf Basis eines Verhältnisses zwischen dem ersten gespeicherten Wert und dem zweiten gespeicherten Wert bestimmt wird.

7. Verfahren nach einem der Ansprüche 1 bis 6, das ebenfalls die folgenden Schritte umfasst:

- Bestimmen eines ersten Beschleunigungswerts und eines zweiten Werts einer anderen Beschleunigung des Kraftfahrzeugs,
- Bestimmen einer Differenz zwischen dem ersten Beschleunigungswert und dem zweiten Wert der anderen Beschleunigung,
- wenn die bestimmte Differenz größer als ein vorbestimmter Schwellenwert ist, weiteres Korrigieren des Werts des Untersteuerungsgradienten ausgehend von einem Korrekturwert in Abhängigkeit von der bestimmten Differenz.

8. Verfahren nach einem der Ansprüche 1 bis 7, wobei das Erkennen von Kurven von charakteristischen Parametern der Bewegung des Kraftfahrzeugs (1) abhängt, wobei mindestens ein Teil der Parameter aus einem Winkel eines Vorderrads des Kraftfahrzeugs (1), einer Giergeschwindigkeit des Kraftfahrzeugs (1), einem seitlichen Abstand zwischen dem Schwerpunkt (G) des Kraftfahrzeugs (1) und einer idealen Fahrbahn, einer Querbeschleunigung des Kraftfahrzeugs (1) oder einer Fahrgeschwindigkeit des Kraftfahrzeugs (1) ausgewählt wird.

9. Verfahren nach einem der Ansprüche 1 bis 8, wobei die erste Größe und die zweite Größe anhand eines rekursiven Verfahrens der kleinsten Quadrate in Abhängigkeit von Zustandsvariablen ($\Phi$, Y) bestimmt werden, die charakteristisch für die Bewegung des Kraftfahrzeugs (1) sind.

10. Verfahren nach einem der Ansprüche 1 bis 9, wobei der Schritt des Bestimmens der Steuerung des Kraftfahrzeugs (1) einen Unterschritt des Bestimmens einer Komponente ($\delta_{FFD}$) eines Lenkwinkels eines Rades des Kraftfahrzeugs (1) umfasst.

11. Vorrichtung (10) zum Überwachen des Fahrwegs eines auf einer Fahrspur fahrenden Kraftfahrzeugs (1), umfassend ein Steuergerät (12) und einen Speicher (14), der mit einer Datenbank mit einer endlichen Anzahl von Speicherplätzen ausgestattet ist, wobei das Steuergerät (12) für Folgendes ausgelegt ist:

- Erkennen einer Kurve der Fahrspur, dann, wenn das Kraftfahrzeug (1) die Kurve befährt,

- Bestimmen einer ersten Größe und einer zweiten Größe für eine Vielzahl von aufeinanderfolgenden Abtastschritten aus Zustandsvariablen ($\Phi$, Y), die charakteristisch für die Bewegung des Kraftfahrzeugs (1) sind,
- Bestimmen eines ersten gespeicherten Werts und eines zweiten gespeicherten Werts, wobei der erste gespeicherte Wert eine Funktion der ersten Größe, die in dem aktuellen Abtastschritt bestimmt wurde, und der ersten Größen ist, die für mindestens einen der vorherigen Abtastschritte bestimmt wurden, wobei der zweite gespeicherte Wert eine Funktion der zweiten Größe, die in dem aktuellen Abtastschritt bestimmt wurde, und der zweiten Größen ist, die für mindestens einen der vorherigen Abtastschritte bestimmt wurden,
- Speichern des ersten gespeicherten Werts und des zweiten gespeicherten Werts ($\Phi^T.\Phi$), die für jeden Abtastschritt bestimmt wurden, dann

wenn das Kraftfahrzeug (1) die Kurve verlässt:

- Bestimmen eines Werts des Untersteuerungsgradienten ($\nabla_{sv\_\delta t\_act}$) in Abhängigkeit von dem ersten gespeicherten Wert und dem zweiten gespeicherten Wert, und
- Bestimmen einer Steuerung des Kraftfahrzeugs (1) auf Basis des bestimmten Werts des Untersteuerungsgradienten ($\nabla_{sv\_\delta t\_act}$).

12. Kraftfahrzeug (1), umfassend eine Antriebseinheit, ein Lenksystem und eine Echtzeit-Fahrwegüberwachungsvorrichtung (10) nach Anspruch 11, die zur Steuerung des Lenksystems geeignet ist.

**Claims**

1. Method for monitoring the path of a motor vehicle (1) travelling on a traffic lane, comprising a step of:

   - detecting a bend on the traffic lane, then, when the motor vehicle (1) takes said bend,
   **characterised in that** it further includes steps of:

      - determining a first quantity and a second quantity for a plurality of successive sampling steps, from state variables ($\Phi$, Y) characteristic of the movement of the motor vehicle (1),
      - determining a first stored value and a second stored value, said first stored value being a function of the first quantity determined at the current sampling step and first quantities determined for at least one of the previous sampling steps, said second stored value being a function of the second quantity determined at the current sampling step and second quantities determined for at least one of the previous sampling steps,
      - storing said first stored value and second stored value determined for each sampling step, then

   when the motor vehicle (1) leaves said bend:

      - determining a value of the understeer gradient ($\nabla_{sv\_\delta t\_act}$) according to said first stored value and second stored value stored, and
      - determining a control of the motor vehicle (1) based on the determined value of the understeer gradient ($\nabla_{sv\_\delta t\_act}$).

2. Method according to claim 1, wherein the first stored value is a function of the sum of the first quantity determined at the current sampling step and first quantities determined for at least one of the previous sampling steps and the second stored value ($\Phi^T.\Phi$) is a function of the sum of the second quantity determined at the current sampling step and second quantities determined for at least one of the previous sampling steps.

3. Method according to claim 1 or 2, wherein the state variables ($\Phi$, Y) characteristic of the movement of the motor vehicle (1) are dependent on a component ($\delta_{FFD}$) of a steering angle of a wheel of the motor vehicle (1), a curvature of the roadway, a speed (v) movement of the motor vehicle (1) or a wheelbase (L) of the motor vehicle (1).

4. Method according to any one of claims 1 to 3, wherein the step of determining the value of the understeer gradient is implemented from one bend to another bend taken by the motor vehicle (1).

5. Method according to any one of claims 1 to 4, also comprising a step of correcting the value of the understeering gradient in order to determine an intermediate value of the understeering gradient ($\nabla_{sv\_\delta tint}$), said intermediate value of the understeering gradient ($\nabla_{sv\_\delta t\_int}$) being determined on the basis of a weighting between the value of the

determined understeering gradient ($\nabla_{sv\_\delta t\_act}$) and a predetermined value.

6. Method according to any one of claims 1 to 5, wherein the value of the understeer gradient ($\nabla_{sv\_\delta t\_act}$) is determined on the basis of a ratio between the first stored value and the second stored value.

7. Method according to any one of claims 1 to 6, also comprising steps of:

- determining a first acceleration value and a second value of another acceleration of the motor vehicle,
- determining a difference between the first acceleration value and the second value of the other acceleration,
- if the determined difference is greater than a predetermined threshold, further correction of the value of the understeer gradient from a correction value depending on said determined difference.

8. Method according to any one of claims 1 to 7, wherein the detection of the bend depends on parameters characteristic of the movement of the motor vehicle (1), at least some of the parameters being selected from an angle of a front wheel of the motor vehicle (1), a yaw rate of the motor vehicle (1), a lateral deviation between the centre of gravity (G) of the motor vehicle (1) and an ideal path, a transverse acceleration of the motor vehicle (1) or a travel speed of the motor vehicle (1).

9. Method according to any one of claims 1 to 8, wherein the first quantity and the second quantity are determined from a method of recursive least squares as a function of state variables ($\Phi$, Y) characteristic of the movement of the motor vehicle (1).

10. Method according to any one of claims 1 to 9, wherein the step of determining the motor vehicle control (1) comprises a sub-step of determining a component ($\delta_{FFD}$) of a steering angle of a wheel of the motor vehicle (1).

11. Device (10) for monitoring the path of a motor vehicle (1) circulating on a traffic lane, comprising a computer (12) and a memory (14) provided with a database having a finite number of locations, said computer (12) being designed for:

- detecting a bend on the traffic lane, then, when the motor vehicle (1) takes said bend,
- determining a first quantity and a second quantity for a plurality of successive sampling steps, from state variables ($\Phi$, Y) characteristic of the movement of the motor vehicle (1),
- determining a first stored value and a second stored value, said first stored value being a function of the first quantity determined at the current sampling step and first quantities determined for at least one of the previous sampling steps, said second stored value being a function of the second quantity determined at the current sampling step and second quantities determined for at least one of the previous sampling steps,
- storing said first stored value and second stored value ($\Phi^T .\Phi$) determined for each sampling step, then

when the motor vehicle (1) leaves said bend:

- determining a value of the understeer gradient ($\nabla_{sv\_\delta t\_act}$) according to said first stored value and second stored value stored, and
- determining a control of the motor vehicle (1) on the basis of the determined value of the understeer gradient ($\nabla_{sv\_\delta t\_act}$).

12. Motor vehicle (1) comprising a powertrain, a steering system, and a real-time pathway control device (10) according to claim 11 adapted to control the steering system.

[Fig. 1]

[Fig. 2]

[Fig. 3]

```
                          ┌──────┐
                          │  E2  │
                          └──────┘
                             │
                          ┌──────┐
                          │  E4  │
                          └──────┘
                             │
              N          ◇ E6 ◇
        ┌───────────────◇     ◇
        │                ◇    ◇
     ┌──────┐              │ P
     │  E8  │           ◇ E20 ◇──────P──────────────────◇ E40 ◇──P──┌──────┐
     └──────┘           ◇     ◇                         ◇      ◇    │ E60  │
        │                ◇    ◇                          ◇    ◇     └──────┘
     ┌──────┐              │ N                             │ N
     │ E10  │           ┌──────┐                        ┌──────┐
     └──────┘           │ E22  │                        │ E42  │
                        └──────┘                        └──────┘
                           │                               │
                        ┌──────┐                        ┌──────┐
                        │ E24  │                        │ E44  │
                        └──────┘                        └──────┘
                           │                               │
              N         ◇ E26 ◇                  N       ◇ E46 ◇
        ┌──────────────◇      ◇          ┌─────────────◇      ◇
                        ◇    ◇                           ◇    ◇
                          │ P                              │ P
                       ┌──────┐                        ┌──────┐
                       │ E28  │                        │ E48  │
                       └──────┘                        └──────┘
                          │                               │
                       ┌──────┐                        ┌──────┐
                       │ E30  │                        │ E50  │
                       └──────┘                        └──────┘
                          │                               │
                       ┌──────┐                        ┌──────┐
                       │ E32  │                        │ E52  │
                       └──────┘                        └──────┘
                          │                               │
                       ┌──────┐                 ┌───────────────┐
                       │ E34  │                 │               │
                       └──────┘             ┌──────┐        ┌──────┐
                   ┌──────┴──────┐          │ E54a │        │ E54b │
               ┌──────┐    ┌──────┐         └──────┘        └──────┘
               │ E36a │    │ E36b │              └──────┬──────┘
               └──────┘    └──────┘                  ┌──────┐
                   └──────┬──────┘                   │ E56  │
                       ┌──────┐                      └──────┘
                       │ E38  │
                       └──────┘
```

[Fig. 4]

$X_{ref}$ ⊕ → 20 → ⊕ → 22

24

26

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3104106
- WO 2021110423 A1